# EUROPEAN PATENT APPLICATION

(11) **EP 4 656 323 A1**
(43) Date of publication of application: **03.12.2025**
(21) Application number: 23936664.4
(22) Date of filing: 07.12.2023
(51) Int. Cl.: B23K 26/00, B23K 26/03, B23K 26/354, G01N 21/47

(54) **LASER PROCESSING METHOD, LASER PROCESSING DEVICE, AND PROCESSING RESULT ESTIMATION METHOD**

(30) Priority: 11.05.2023 JP 2023078394
(71) Applicant: Hamamatsu Photonics K.K., Hamamatsu-shi, Shizuoka 435-8558 (JP)
(72) Inventor: KURATA, Masateru, Hamamatsu-shi, Shizuoka 435-8558 (JP); WATARI, Takeshi, Hamamatsu-shi, Shizuoka 435-8558 (JP); KINE, Yuta, Hamamatsu-shi, Shizuoka 435-8558 (JP); SAKAI, Koichi, Hamamatsu-shi, Shizuoka 435-8558 (JP); KURITA, Takashi, Hamamatsu-shi, Shizuoka 435-8558 (JP)
(74) Representative: Grünecker Patent- und Rechtsanwälte PartG mbB
(86) International application number: PCT/JP2023/043893
(87) International publication number: WO 2024/232116

(57) **Abstract**

According to this laser processing method, an inspection beam Lb is radiated to a planned irradiation spot K of processing laser light Lw on a surface Sa of an object S, pre-processing spot data D1 about a pre-processing surface state of the object is acquired, an optimum parameter D2 of the processing laser light Lw is estimated using an estimation program 26 that outputs a result of estimating the optimum parameter of the processing laser light Lw in accordance with an input of the pre-processing spot data D1, and the planned irradiation spot K is irradiated with the processing laser light Lw on the basis of an optimum parameter estimation result D2.

## Description

### Technical Field

The present disclosure relates to a laser processing method, a laser processing device, and a processing result estimation method.

### Background Art

Recently, research and development (R&D) of processing methods for surface polishing processing, surface water repellent processing, and surface hydrophilic processing using material melting and resolidification has been promoted as new technology for a laser processing method for processing the surface of an object by radiating laser light to the object. Because this laser processing method is spot processing of a microscopic area that depends on a spot diameter of processing laser light instead of surface processing like conventional polishing technology using a whetstone or the like, it is possible to perform localized processing and processing that leaves edges. Moreover, in this laser processing method, a process for rearranging material melting and resolidification is performed in a state in which the material on the surface of the object is not removed. Thus, there is an advantage because the surface can be processed in a non-contact, dry process.

On the other hand, in this laser processing method, the processing result tends to strongly depend on a pre-processing surface state of the object. Therefore, it is important to homogenize a pre-processing surface of the object by polishing or the like and it is necessary to adjust parameters of the processing laser used for actual processing for each desired spatial resolution in accordance with the measurement results of the surface state and the material properties of the object.

### Citation List

### Patent Literature

[Patent Literature 1] PCT International Publication No. WO/2020/31946

### Summary of Invention

### Technical Problem

As parameter setting technology for use in processing, for example, there is a laser processing device described in Patent Literature 1. In this conventional laser processing device, deep learning is performed using the material of the object, the parameters of the laser light radiated to the object, and three-dimensional shape data of the object before and after processing and a relationship between the input data and the three-dimensional shape data of the object after the processing as the output data is obtained as one of the learning results.

However, because the laser processing device described in the above-described Patent Literature 1 is a system that performs laser ablation processing and laser ablation processing involves complex physical phenomena, it is assumed that three-dimensional mapping data about the shape and depth of the pores due to processing is used in estimating the parameters of the processing laser light.

Because three-dimensional mapping data is constructed on the basis of a large number of image data items acquired by a three-dimensional instrument such as a white interference microscope, data processing for estimating the parameters of the laser light becomes complex. In spot processing, a region of processing to be performed at one time is small with respect to a processing area and the total number of processing operations is likely to be large. For this reason, technology for estimating parameters of laser light at high speed while taking into account that the inline evaluation of surface states before and after processing is performed is desirable.

The present disclosure has been made to solve the above-described problems and an objective of the present disclosure is to provide a laser processing method, a laser processing device, and a processing result estimation method for enabling parameters of laser light to be estimated at high speed.

### Solution to Problem

According to an aspect of the present disclosure, there is provided a laser processing method for performing spot processing of a surface of an object by radiating processing laser light to the surface, the laser processing method comprising: a pre-processing acquisition step of radiating an inspection beam to a planned irradiation spot of the processing laser light on the surface of the object and acquiring pre-processing spot data about a pre-processing surface state of the object in the planned irradiation spot on the basis of a result of radiating the inspection beam in the planned irradiation spot; an estimation step of estimating an optimum parameter of the processing laser light for setting a post-processing surface state of the object in the planned irradiation spot as a target surface state using an estimation program for outputting a result of estimating the optimum parameter of the processing laser light radiated to the planned irradiation spot in accordance with an input of the pre-processing spot data; and a processing step of radiating the processing laser light to the planned irradiation spot on the basis of the result of estimating the optimum parameter of the processing laser light, wherein the pre-processing acquisition step, the estimation step, and the processing step are performed in that order.

In this laser processing method, the optimum parameter of the processing laser light using the pre-processing spot data is estimated for one planned irradiation spot corresponding to one beam of processing laser light. Thereby, it is possible to avoid the complexity of data processing required for the estimation, compared to the conventional method for estimating the optimum parameter of the processing laser light on the basis of three-dimensional mapping data constructed using a large number of image data items. Therefore, this laser processing method enables high-speed estimation of the optimum parameters of the processing laser light and inline evaluation of surface states before and after processing.

A plurality of planned irradiation spots may be set on the surface of the object, the pre-processing acquisition step may include acquiring the pre-processing spot data of the plurality of planned irradiation spots, and the estimation step may include estimating the optimum parameter of the processing laser light for each of the plurality of planned irradiation spots. In this case, high-speed surface processing can be implemented through continuous optimum spot processing.

The estimation step may include estimating the optimum parameter of the processing laser light for each of the plurality of planned irradiation spots so that post-processing surface states in the plurality of planned irradiation spots are uniform. In this case, processing can be performed at high speed with uniform surface states in the plurality of planned irradiation spots.

The plurality of planned irradiation spots may be set on the surface of the object, and the pre-processing acquisition step may be performed for the next planned irradiation spot at a timing when the processing step is performed for one planned irradiation spot. In this case, because the processing of one planned irradiation spot and the inspection of the next planned irradiation spot overlap in time, it is possible to shorten a period between the processing of one planned irradiation spot and the processing of the next planned irradiation spot. Thus, processing of a plurality of spots can be performed at higher speed.

The pre-processing spot data may include at least one of an intensity of specular reflected light of the inspection laser light in the planned irradiation spot, an intensity of scattered light of the inspection laser light, a ratio of the intensity of specular reflected light and the intensity of scattered light, a half width of an X-ray diffraction intensity profile, a center position of an X-ray diffraction ring, a Fourier transform value of a scattered light image, displacement data from optical interference measurement, and displacement data from a non-contact displacement meter using the inspection beam. When at least one of the above-described parameters is included in the pre-processing spot data, the optimum parameters of the processing laser light can be estimated more accurately.

Optimum parameters of the processing laser light may include at least one of a wavelength, a pulse width, a pulse intensity, the number of pulses, a pulse shape, a spatial phase pattern, and a fluence. When at least one of the above-described parameters is included in the optimum parameters of the processing laser light, the processing of the object's surface can be performed more suitably.

The spot width of the processing laser light may be 200 µm or less. The spatial resolution of processing is improved by setting the planned irradiation spot of the processing laser light to a narrow area with a width of 200 µm or less.

The laser processing method may further comprise a post-processing acquisition step of acquiring post-processing spot data about the post-processing surface state of the object in the planned irradiation spot; and a determination step of determining whether or not it is necessary to re-execute the processing step on the basis of a comparison between a target post-processing surface state of the object and the post-processing surface state of the object indicated in the post-processing spot data. In this case, the deviation between the target post-processing surface state and the actual post-processing surface state can be corrected by re-executing the processing step as necessary.

According to an aspect of the present disclosure, there is provided a laser processing device for radiating processing laser light to a surface of an object to perform spot processing of the surface, the laser processing device comprising: a light source configured to output the processing laser light toward a planned irradiation spot of the surface of the object; a beam source configured to output an inspection beam toward the planned irradiation spot; a detection unit configured to detect a result of radiating the inspection beam in the planned irradiation spot; an acquisition unit configured to acquire pre-processing spot data about a pre-processing surface state of the object in the planned irradiation spot on the basis of the result detected by the detection unit; an estimation unit configured to estimate an optimum parameter of the processing laser light for setting a post-processing surface state of the object in the planned irradiation spot as a target surface state using an estimation program for outputting a result of estimating the optimum parameter of the processing laser light radiated to the planned irradiation spot in accordance with an input of the pre-processing spot data; and a control unit configured to control an output of the processing laser light in the light source on the basis of the result of estimating the optimum parameter of the processing laser light.

In this laser processing device, the optimum parameter of the processing laser light using the pre-processing spot data is estimated for one planned irradiation spot corresponding to one beam of processing laser light. Thereby, it is possible to avoid the complexity of data processing required for the estimation, compared to the conventional method for estimating the optimum parameter of the processing laser light on the basis of three-dimensional mapping data constructed using a large number of image data items. Therefore, this laser processing device enables high-speed estimation of the optimum parameters of the processing laser light and inline evaluation of surface states before and after processing.

The acquisition unit may acquire the pre-processing spot data for each of the plurality of planned irradiation spots, and the estimation unit may estimate the optimum parameter of the processing laser light for each of the plurality of planned irradiation spots. In this case, high-speed surface processing can be implemented through continuous optimum spot processing.

The estimation unit may estimate the optimum parameter of the processing laser light for each of the plurality of planned irradiation spots so that post-processing surface states in the plurality of planned irradiation spots are uniform. In this case, processing can be performed at high speed with uniform surface states in the plurality of planned irradiation spots.

The control unit may cause the light source and the beam source to be synchronized so that the inspection beam is output to the next planned irradiation spot at a timing when the processing laser light is output to one planned irradiation spot. In this case, because the processing of one planned irradiation spot and the inspection of the next planned irradiation spot overlap in time, it is possible to shorten a period between the processing of one planned irradiation spot and the processing of the next planned irradiation spot. Thus, processing of a plurality of spots can be performed at higher speed.

The pre-processing spot data may include at least one of an intensity of specular reflected light of the inspection laser light in the planned irradiation spot, an intensity of scattered light of the inspection laser light, a ratio of the intensity of specular reflected light and the intensity of scattered light, a half width of an X-ray diffraction intensity profile, a center position of an X-ray diffraction ring, a Fourier transform value of a scattered light image, displacement data from optical interference measurement, and displacement data from a non-contact displacement meter using the inspection beam. When at least one of the above-described parameters is included in the pre-processing spot data, the optimum parameters of the processing laser light can be estimated more accurately.

Optimum parameters of the processing laser light may include at least one of a wavelength, a pulse width, a pulse intensity, the number of pulses, a pulse shape, a spatial phase pattern, and fluence. When at least one of the above-described parameters is included in the optimum parameters of the processing laser light, the processing of the object's surface can be performed more suitably.

The spot width of the processing laser light may be 200 µm or less. The spatial resolution of processing is improved by setting the planned irradiation spot of the processing laser light to a narrow area with a width of 200 µm or less.

The laser processing device may further comprise a stage configured to hold the object freely movable in at least an in-plane direction of the surface. In this case, the processing and inspection points on the surface of the object can be scanned without moving the system of processing laser lights and inspection beams. Thus, workability of processing can be improved.

The acquisition unit may acquire post-processing spot data about the post-processing surface state of the object in the planned irradiation spot, and the laser processing device may further include a determination unit configured to determine whether or not it is necessary to re-execute a process of radiating the processing laser light for the planned irradiation spot on the basis of a comparison between a target post-processing surface state of the object and a post-processing surface state of the object indicated in the post-processing spot data. In this case, the deviation between the target post-processing surface state and the actual post-processing surface state can be corrected by re-executing a process of radiating the processing laser light for the planned irradiation spot as necessary.

According to an aspect of the present disclosure, there is provided a processing result estimation method for estimating post-processing spot data about a post-processing surface state of an object in laser processing for performing spot processing on a surface of the object by radiating processing laser light to the surface, the processing result estimation method comprising: a pre-processing acquisition step of radiating an inspection beam to a planned irradiation spot of the processing laser light on the surface of the object and acquiring pre-processing spot data about a pre-processing surface state of the object in the planned irradiation spot on the basis of a result of radiating the inspection beam in the planned irradiation spot; and an estimation step of estimating the post-processing spot data about the post-processing surface state of the object in the planned irradiation spot when the planned irradiation spot is processed with the processing laser light of any parameter using the pre-processing spot data and an estimation program for outputting a result of estimating the post-processing spot data in accordance with an input of any parameter related to the processing laser light radiated to the planned irradiation spot, wherein the pre-processing acquisition step and the estimation step are performed in that order.

In this processing result estimation method, the estimation of pre-processing spot data and post-processing spot data using any parameter related to the processing laser light is performed for one planned irradiation spot corresponding to one beam of processing laser light. Thereby, it is possible to avoid the complexity of data processing required for the estimation, compared to the conventional method in which the post-processing spot data is estimated on the basis of three-dimensional mapping data constructed using a large number of image data items. Therefore, in the processing result estimation method, it is possible to perform high-speed estimation of the post-processing spot data and inline evaluation of post-processing surface states.

### Advantageous Effects of Invention

According to the present disclosure, parameters of laser light can be estimated at high speed.

### Brief Description of Drawings

FIG. 1 is a schematic diagram showing a configuration of a laser processing device according to an embodiment of the present disclosure.
FIG. 2 is a schematic diagram showing an example in which a planned irradiation spot is set on a surface of an object.
FIG. 3 is a block diagram showing functional constituent elements of a computer.
FIG. 4 is a flowchart showing a laser processing method according to a first embodiment of the present disclosure.
FIG. 5 is a diagram showing an example of a processing flow and a data flow in the laser processing method shown in FIG. 4.
FIG. 6 is a diagram showing an example of a calibration curve model.
FIG. 7 is a diagram showing another example of a processing flow and a data flow in the laser processing method shown in FIG. 4.
FIG. 8 is a flowchart showing the laser processing method according to a second embodiment of the present disclosure.
FIG. 9 is a diagram showing an example of a processing flow and a data flow in the laser processing method shown in FIG. 8.
FIG. 10 is a diagram showing a processing result estimation method according to an embodiment of the present disclosure.
FIG. 11 is a diagram showing an example of a laser processing method to which the processing result estimation method shown in FIG. 10 is applied.

### Description of Embodiments

Hereinafter, preferred embodiments of a laser processing method, a laser processing device, and a processing result estimation method according to an aspect of the present disclosure will be described in detail with reference to the drawings.

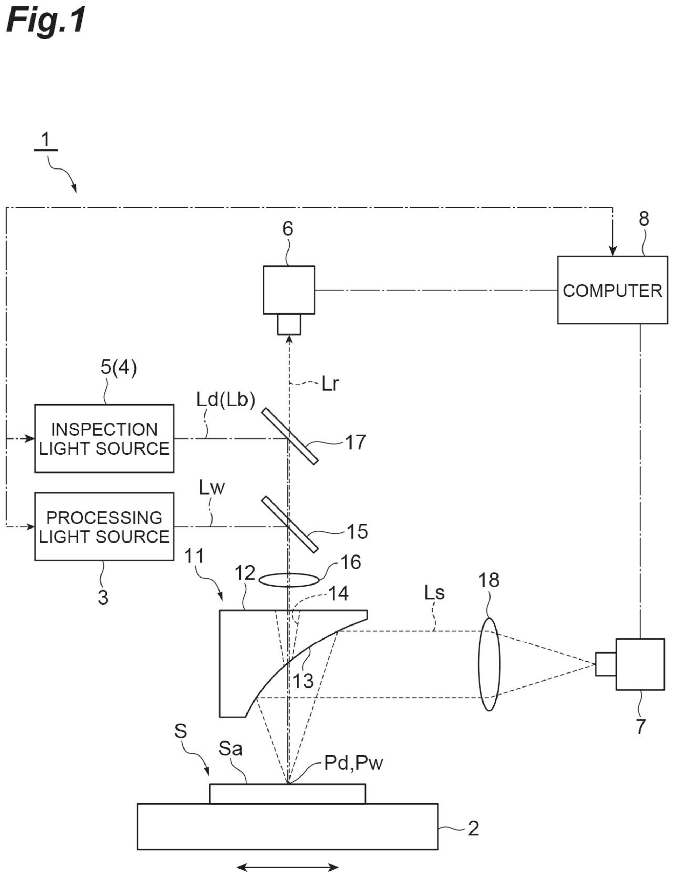

FIG. 1 is a schematic view showing a configuration of a laser processing device according to an embodiment of the present disclosure. A laser processing device 1 shown in FIG. 1 is configured as a device for performing surface processing of an object S by radiating processing laser light Lw to the object S. The object S is not particularly limited, but is, for example, various types of metal materials such as copper, aluminum, and iron or a semiconductor wafer. Surface processing performed by the laser processing device 1 is different from conventional surface processing such as polishing technology using a whetstone or the like, and is spot processing on a small region that depends on a spot diameter of processing laser light, and is surface polishing, surface water repellent processing, and surface hydrophilic processing using the material melting and resolidification.

By using the estimation program 26 to be described below, the laser processing device 1 estimates the optimum parameters of the processing laser light Lw for the planned irradiation spot K at high speed and performs a process for radiating one beam of processing laser light Lw for one planned irradiation spot K using the estimated optimum parameters. The laser processing device 1 repeatedly estimates the optimum parameters of the processing laser light Lw and radiates the processing laser light Lw using the optimum parameters for each planned irradiation spot K, thereby implementing high-speed surface processing through continuous optimum spot processing.

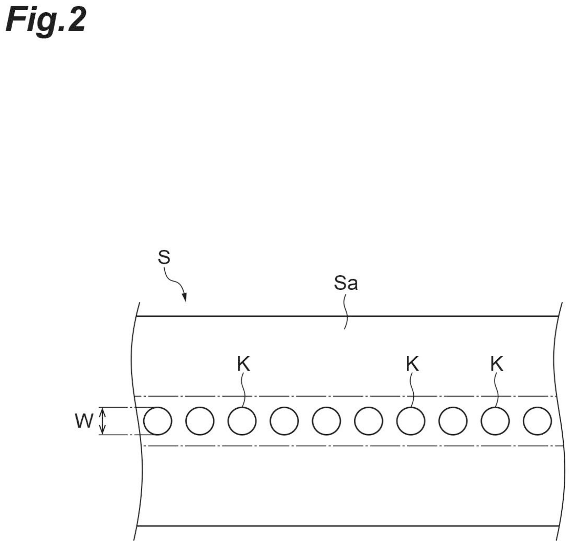

In the present embodiment, as shown in FIG. 2, a plurality of planned irradiation spots K are set on a surface Sa of the object S. The spot width W of the processing laser light is, for example, 200 µm or less or 100 µm or less. In the example shown in FIG. 2, a plurality of planned irradiation spots K are set in a line shape, and surface processing of the surface Sa is performed by sequentially executing spot processing on these planned irradiation spots K. The estimation of the optimum parameters of the processing laser light Lw and the irradiation of the processing laser light Lw using the optimum parameters may be performed each time for the spot processing of a single planned irradiation spot K or may be performed collectively for the spot processing of the plurality of planned irradiation spots K.

In the present embodiment, the planned irradiation spot K is an area matching the laser width of the processing laser light Lw on the surface Sa of the object S. However, the planned irradiation spot K does not necessarily have to perfectly match the laser width of the processing laser light Lw on the surface Sa of the object S. For example, the irradiated area on the surface Sa of the object S in the case of minute scanning of the processing laser light Lw, which is CW light, can also be included.

As shown in FIG. 1, the laser processing device 1 is configured to include a stage 2 on which the object S is placed, a processing light source 3 configured to output processing laser light Lw, and a beam source 4 configured to output the inspection beam Lb. Although beams such as sound waves can be used as the inspection beam Lb, laser light is used in the present embodiment. In other words, in the present embodiment, the beam source 4 includes an inspection light source 5 that outputs an inspection laser light Ld.

It is only necessary to radiate the inspection beam Lb so that at least the planned irradiation spot K is included and the inspection beam Lb does not necessarily need to perfectly match the planned irradiation spot K. The inspection beam Lb, for example, may be radiated to a range slightly larger or smaller than the planned irradiation spot K. In view of the relationship of obtaining data on the surface state of the object in the planned irradiation spot K with high accuracy, it is preferable to cause the irradiation range of the inspection beam Lb to match the planned irradiation spot K as much as possible.

Moreover, the laser processing device 1 is configured to include a first detection unit 6 configured to detect the specular reflected light Lr of the inspection laser light Ld, a second detection unit 7 configured to detect the scattered light Ls of the inspection laser light Ld, and a computer 8 configured to control operations of inspection light sources 3 and 5, and the like. A light guide optical system including an off-axis parabolic mirror element 11 is arranged on an optical path of the processing laser light Lw, the inspection laser light Ld, the specular reflected light Lr, and the scattered light Ls.

The stage 2 has a placement area where the object S is placed. The object S is placed in the placement area so that the surface Sa faces in a progress direction of the processing laser light Lw and the inspection laser light Ld. In the present embodiment, stage 2 includes, for example, a three-axis movable stage. The stage 2 is movable in the direction of the inspection laser light Ld so that the off-axis parabolic mirror element 11 is aligned with the object S in the height direction. Moreover, the stage 2 is movable in the in-plane direction of the surface Sa of the object S for the purpose of scanning an irradiation position Pw of the processing laser light Lw and an irradiation position Pd of the inspection laser light Ld on the surface Sa of the object S.

The processing light source 3 is a device configured to output the processing laser light Lw to the surface Sa of the object S. As the processing light source 3, for example, a YAG laser or the like can be used. The processing laser light Lw is, for example, pulsed light. As an example, the wavelength of the processing laser light Lw is 1064 nm, the output intensity is 5 GW/cm², the beam diameter is 50 µm, and the repetition frequency is 300 kHz. In addition, CW light may be used as the processing laser light Lw. In this case, as an example, a fiber laser (wavelength 1090 nm) with an output power of about 100 W can be used. The processing laser light Lw output from the processing light source 3 is reflected by a dichroic mirror 15 and then condensed by a condenser lens 16, such that the processing laser light Lw travels approximately perpendicularly to the surface Sa of the object S placed on the stage 2.

The inspection light source 5 is a device that outputs inspection laser light Ld to the object S. As the inspection light source 5, for example, a HeNe laser or the like can be used. The inspection laser light Ld is, for example, CW light. As an example, the wavelength of the inspection laser light Ld is 632.8 nm, the output power is 1m W, and the beam diameter is 50µm. The inspection laser light Ld output from the inspection light source 5 is reflected by the half mirror 17, transmitted through the dichroic mirror 15, condensed by the condenser lens 16, and travels approximately perpendicular to the surface Sa of the object S placed on the stage 2.

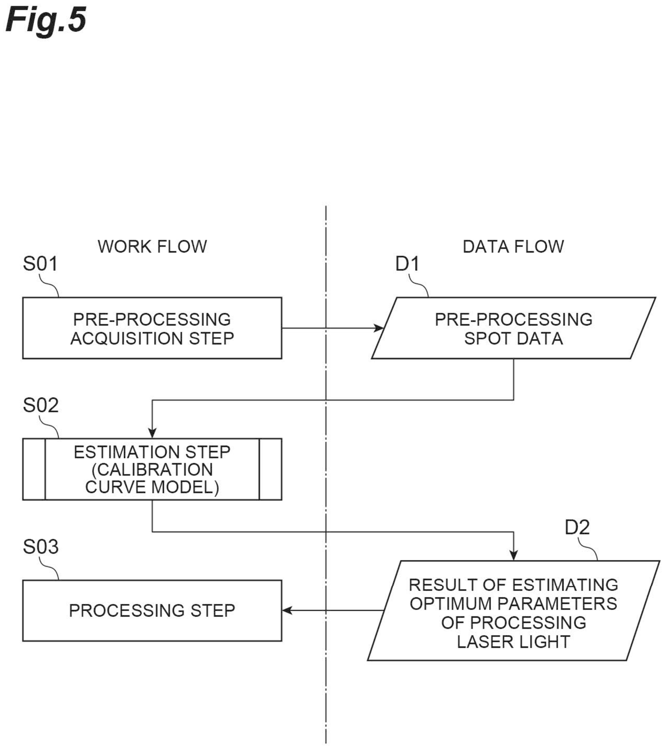

A positional relationship between the irradiation position Pw of the processing laser light Lw and the irradiation position Pd of the inspection laser light Ld, for example, is set in accordance with an acquisition aspect of the pre-processing spot data (see FIG. 5) to be described below. The irradiation position Pw of the processing laser light Lw and the irradiation position Pd of the inspection laser light Ld may match each other or the irradiation position Pd of the inspection laser light Ld may precede the irradiation position Pw of the processing laser light Lw in the scanning direction.

The first detection unit 6 is a part configured to detect the specular reflected light Lr of the inspection laser light Ld from a measurement point on the surface Sa of the object S. The first detection unit 6 generates information indicating a result of detecting the specular reflected light Lr and outputs the information to the computer 8. In the present embodiment, the first detection unit 6, for example, includes a single-channel photodiode and outputs an intensity signal (an electric current value signal or voltage value signal) with a magnitude proportional to the result of detecting the specular reflected light Lr to the computer 8.

The specular reflected light Lr is light reflected so that the angle of incidence is equal to the angle of reflection with respect to the reflecting surface. In this system, the inspection laser light Ld is vertically incident on the surface Sa of the object S. Therefore, the specular reflected light Lr is light reflected vertically from the irradiation position (measurement point) Pd of the inspection laser light Ld on the surface Sa of the object S. An intensity of the specular reflected light Lr tends to increase as the surface roughness of the measurement point decreases.

The second detection unit 7 detects the scattered light Ls of the inspection laser light Ld from the measurement point on the surface Sa of the object S. The second detection unit 7 generates information indicating a result of detecting the scattered light Ls and outputs the information to the computer 8. In the present embodiment, like the first detection unit 6, the second detection unit 7, for example, includes a single-channel photodiode and outputs a current value signal or voltage value signal with a magnitude proportional to the result of detecting the scattered light Ls to the computer 8.

The scattered light Ls is light that is reflected over a wide area from the reflective surface due to the surface roughness of the reflective surface. The scattered light Ls diffuses in all directions starting from the irradiation position (measurement point) Pd of the inspection laser light Ld on the surface Sa of the object S. The scattered light Ls can reflect from the measurement point with anisotropy according to a polishing direction when the surface Sa of the object S is, for example, a polished surface, and the surface roughness is directional. The scattered light Ls tends to be smaller as the surface roughness of the measurement point is smaller, and can be weak in intensity when the surface Sa of the object S is smooth so that it is almost mirror-like.

The off-axis parabolic mirror element 11 is used to improve the detection accuracy of the specular reflected light Lr and scattered light Ls. The off-axis parabolic mirror element 11 has a first surface 12, a second surface 13 located opposite the first surface 12, and a through-hole 14 connecting the first and second surfaces 12 and 13. The first surface 12 is a flat non-mirror surface, whereas the second surface 13 is a concave parabolic mirror surface. The through-hole 14 communicates with the space on the first surface 12 side and the space on the second surface 13 side. The through-hole 14 has, for example, a cross-sectional circular shape. The through-hole 14 has a gradually decreasing diameter as it moves from the first surface 12 side to the second surface 13 side.

As shown in FIG. 1, the off-axis parabolic mirror element 11 is arranged so that the inspection laser light Ld from the inspection light source 5 travels from the first surface 12 side to the object S through the through-hole 14, the specular reflected light Lr travels from the second surface 13 side to the first detection unit 6 through the through-hole 14, and the scattered light Ls reflected on the second surface 13 travels to the second detection unit 7. Moreover, the off-axis parabolic mirror element 11 is arranged so that the focus of the second surface 13 that is the concave parabolic mirror surface matches the measurement point of the inspection laser light Ld.

With this arrangement of the off-axis parabolic mirror element 11, in the present embodiment, the processing laser light Lw and the inspection laser light Ld travel perpendicular from the first surface 12 side to the surface Sa of the object S through the through-hole. The specular reflected light Lr on the measurement point of the inspection laser light Ld passes through the through-hole 14 from the second surface 13 side coaxially and in the opposite direction with the inspection laser light Ld, passes through the condenser lens 16, the dichroic mirror 15, and the half mirror 17, and then enters the first detection unit 6.

The scattered light Ls generated at the measurement point of the inspection laser light Ld travels to the second detection unit 7 with a certain solid angle by the second surface 13 of the off-axis parabolic mirror element 11, which is a concave parabolic mirror surface, and enters the second detection unit 7 after being condensed by the condenser lens 18. Therefore, even if the surface Sa of the object S is a polished surface and the scattered light Ls is anisotropic or even if the surface Sa of the object S is smooth and the scattered light Ls is weak, the scattered light Ls can be detected with a sufficient intensity by the second detection unit 7.

Moreover, it is conceivable that the irradiation of the processing laser light Lw may cause plasma emission on the surface Sa of the object S, but the through-hole 14 of the off-axis parabolic mirror element 11 functions as an aperture through which only the specular reflected light Lr passes in the present embodiment. Thereby, it is possible to suppress a process in which the emission of plasma generated on the surface Sa of the object S affects the measurement of the surface state of the object S. Furthermore, an aperture may be placed on the path from the second surface 13 of the off-axis parabolic mirror element 11 to the second detection unit 7 (e.g., at the position between the condenser lens 18 and the second detection unit 7). In this case, a process in which the plasma emission generated on the surface Sa of the object S enters the second detection unit 7 can be suppressed and a process in which the emission of plasma affects the measurement of the surface state of the object S can be more reliably suppressed.

The computer 8 physically includes, for example, a processor, such as a CPU, and a storage medium, such as RAM and ROM. The computer 8 may be a smartphone or a tablet terminal with an integrated display and an input unit. The computer may include a microcomputer or a field-programmable gate array (FPGA).

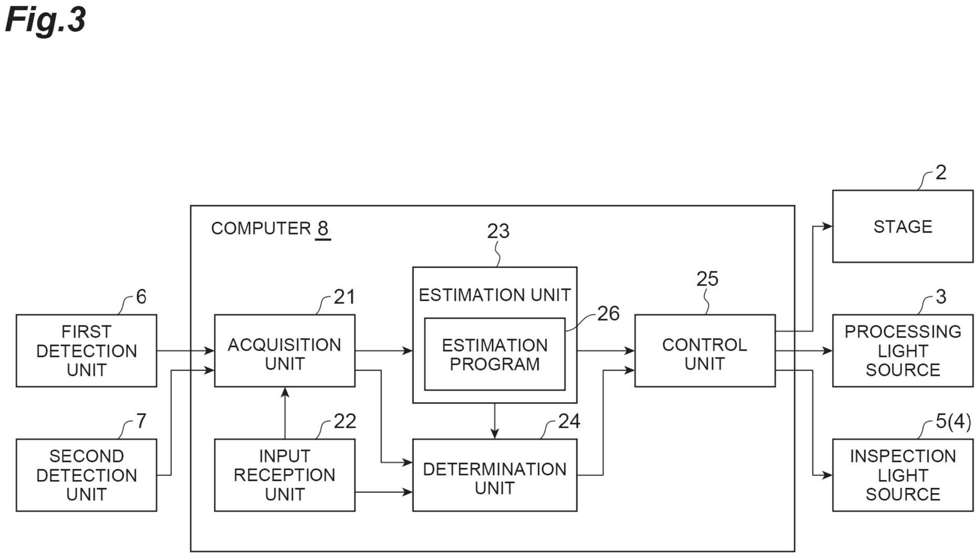

As shown in FIG. 3, the computer 8 includes an acquisition unit 21, an input reception unit 22, an estimation unit 23, a determination unit 24, and a control unit 25 as functional constituent elements.

The acquisition unit 21 is a part configured to acquire pre-processing spot data D1 about the pre-processing surface state of the object S in the planned irradiation spot K on the basis of a result of detecting light from the planned irradiation spot K according to the irradiation of the inspection beam Lb. The pre-processing spot data D1 includes only data represented by numerical values or character strings without including two- or three-dimensional image data. Specifically, the pre-processing spot data D1 includes, for example, at least one of a material of the object S, a temperature in a processing environment, an intensity of specular reflected light of the inspection laser light Ld in the planned irradiation spot K, an intensity of scattered light of the inspection laser light Ld, a ratio of the intensity of specular reflected light and the intensity of scattered light, a half width of an X-ray diffraction intensity profile, a center position of an X-ray diffraction ring, a Fourier transform value of a scattered light image, displacement data from optical interference measurement, and displacement data from a non-contact displacement meter using the inspection beam Lb.

In the present embodiment, the pre-processing spot data D1 is configured to include the material of the object S and the ratio between the intensity of the specular reflected light and the intensity of the scattered light. Information about the material of the object S is input to the input reception unit 22, for example, by the user of the laser processing device 1, and is output from the input reception unit 22 to the acquisition unit 21. Information about the intensity of the specular reflected light Lr is output from the first detection unit 6 to the acquisition unit 21, and information about the intensity of the scattered light Ls is output from the second detection unit 7 to the acquisition unit 21. The acquisition unit 21 calculates the ratio between the intensity of the specular reflected light and the intensity of the scattered light on the basis of the input information about the intensity of the specular reflected light Lr and the intensity of the scattered light Ls.

In the present embodiment, the acquisition unit 21 acquires pre-processing spot data D1 of each of the plurality of planned irradiation spots K, as the irradiation position Pd of the inspection laser light Ld is scanned on the line of the plurality of planned irradiation spots K when the stage 2 is driven. The acquisition unit 21 outputs the acquired pre-processing spot data D1 to the estimation unit 23.

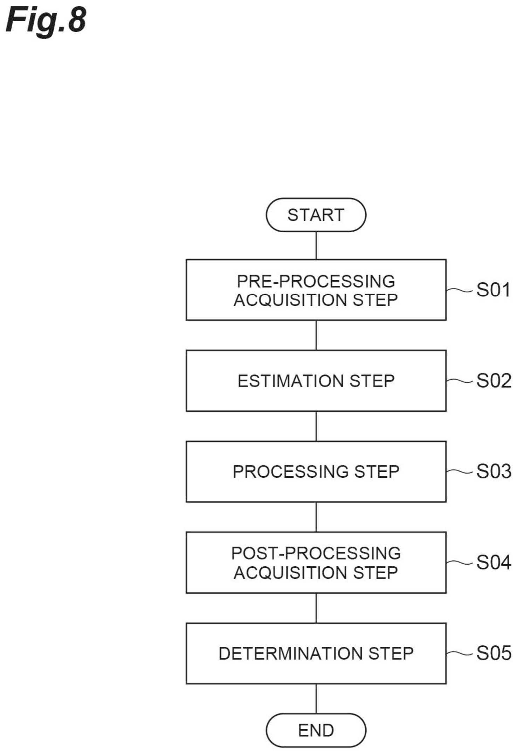

The acquisition unit 21 may acquire post-processing spot data D4 (see FIG. 8) about the post-processing surface state of the object S in the planned irradiation spot K. The post-processing spot data D4 includes only data represented by numerical values or character strings without including two- or three-dimensional image data. Specifically, like the pre-processing spot data D1, the post-processing spot data D4 includes, for example, at least one of a material of the object S, an intensity of specular reflected light of the inspection laser light Ld in the planned irradiation spot K, an intensity of scattered light of the inspection laser light Ld, a ratio of the intensity of specular reflected light and the intensity of scattered light, a half width of an X-ray diffraction intensity profile, a center position of an X-ray diffraction ring, a Fourier transform value of a scattered light image, displacement data from optical interference measurement, and displacement data from a non-contact displacement meter using the inspection laser light Ld.

In the present embodiment, like the pre-processing spot data D1, the post-processing spot data D4 is configured to include the material of the object S and the ratio between the intensity of the specular reflected light and the intensity of the scattered light. Information about the material of the object S, for example, is input to the input reception unit 22 by the user of the laser processing device 1 and is output from the input reception unit 22 to the acquisition unit 21. Information about the intensity of the specular reflected light Lr is output from the first detection unit 6 to the acquisition unit 21, and information about the intensity of the scattered light Ls is output from the second detection unit 7 to the acquisition unit 21. The acquisition unit 21 calculates the ratio between the intensity of the specular reflected light and the intensity of the scattered light on the basis of the input information about the intensity of the specular reflected light Lr and the intensity of the scattered light Ls.

In the present embodiment, the acquisition unit 21 acquires the post-processing spot data D4 for each of the plurality of planned irradiation spots K, as the irradiation position Pd of the inspection laser light Ld is scanned on the line of the plurality of planned irradiation spots K when the stage 2 is driven. The acquisition unit 21 outputs the acquired post-processing spot data D4 to the estimation unit 23. Moreover, the acquisition unit 21 outputs the acquired post-processing spot data D4 to the determination unit 24 as necessary.

The input reception unit 22, for example, is a part configured to receive an input of information from the user of the laser processing device 1. Information to be input to the input reception unit 22 includes, for example, information necessary for generating pre-processing spot data D1 (such as the material of the object S described above), information about the target post-processing surface state of the object S, and the like. The input reception unit 22 outputs information necessary to generate the pre-processing spot data D1 to the acquisition unit 21 and outputs information about the target post-processing surface state of the object S to the determination unit 24.

The estimation unit 23 is a part configured to estimate the optimum parameters of the processing laser light Lw to set the post-processing surface state of the object S in the planned irradiation spot K as the target surface state. Optimum parameters of the processing laser light Lw include, for example, at least one of a wavelength, a pulse width, a pulse intensity, the number of pulses, a pulse shape, a spatial phase pattern, and fluence. In the present embodiment, the estimation unit 23 estimates the optimum parameter of the processing laser light for each of the plurality of planned irradiation spots K so that the post-processing surface states in the plurality of planned irradiation spots K are uniform.

In the estimation unit 23, the estimation program 26 is used to estimate the optimum parameters of the processing laser light Lw. The estimation program 26 is a program that outputs a result of estimating the optimum parameter of the processing laser light Lw to be radiated to the planned irradiation spot K in accordance with the input of the pre-processing spot data D1. Details of the estimation program 26 will be described below. The estimation unit 23 outputs the result of estimating the optimum parameter of the processing laser light Lw output by the estimation program to the control unit 25. Moreover, the estimation unit 23 outputs the result of estimating the optimum parameter of the processing laser light Lw output by the estimation program to the determination unit 24 as necessary.

The control unit 25 is a part configured to control the output of the processing laser light Lw in the processing light source 3 on the basis of the result of estimating the optimum parameter of the processing laser light Lw. The control unit 25 operates to drive the processing light source 3, the inspection light source 5, and the stage 2. The control of the processing light source 3 and the inspection light source 5 by the control unit 25 is set in accordance with a positional relationship between the irradiation position Pw of the processing laser light Lw and the irradiation position Pd of the inspection laser light Ld.

When the irradiation position Pw of the processing laser light Lw and the irradiation position Pd of the inspection laser light Ld match each other, the control unit 25 causes the inspection laser light Ld to be radiated earlier in time and performs a process of outputting the processing laser light Lw for one planned irradiation spot K under an output condition based on the optimum parameters after acquiring the result of estimating the optimum parameter of the processing laser light Lw for the above-described one planned irradiation spot K.

When the irradiation position Pd of the inspection laser light Ld precedes the irradiation position Pw of the processing laser light Lw in the scanning direction, the control unit 25 causes the processing light source 3 to be synchronized with the inspection light source 5 so that the inspection beam Lb is output to the next planned irradiation spot K at a timing when the processing laser light Lw is output to one planned irradiation spot K.

The determination unit 24 is a part configured to determine whether or not it is necessary to re-execute a process of radiating the processing laser light Lw to the planned irradiation spot K. In the present embodiment, the determination unit 24 receives the post-processing spot data D4 from the acquisition unit 21 and information about the target post-processing surface state of the object from the input reception unit 22. Also, the determination unit 24 determines whether or not it is necessary to re-execute a process of radiating the processing laser light Lw to the planned irradiation spot K on the basis of a comparison between the target post-processing surface state of the object S and the post-processing surface state of the object S indicated in the post-processing spot data D4.

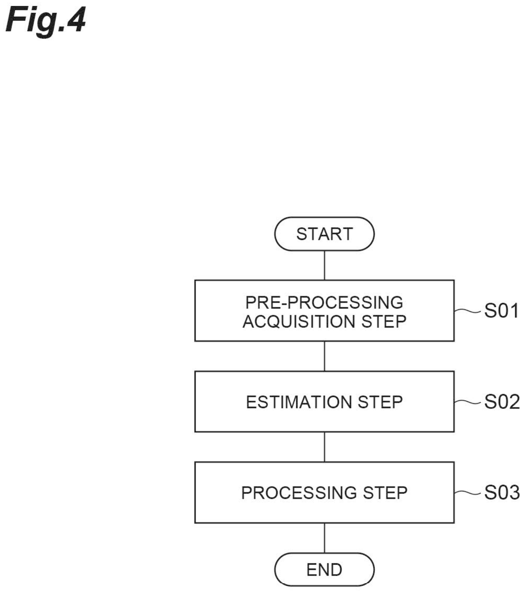

Next, a laser processing method according to an aspect of the present disclosure will be described. This laser processing method of the present embodiment is performed using the laser processing device 1 described above. FIG. 4 is a flowchart showing the laser processing method according to the first embodiment of the present disclosure. As shown in FIG. 4, in the laser processing method according to the first embodiment, a pre-processing acquisition step S01, an estimation step S02, and a processing step S03 are performed in that order.

The pre-processing acquisition step S01 is the step of radiating an inspection beam Lb to a planned irradiation spot of the processing laser light Lw on the surface of the object S and acquiring pre-processing spot data D1 about a pre-processing surface state of the object S in the planned irradiation spot K on the basis of light from the planned irradiation spot K according to irradiation of the inspection beam Lb.

The estimation step S02 is the step of estimating an optimum parameter of the processing laser light Lw for setting a post-processing surface state of the object S in the planned irradiation spot K as a target surface state using the estimation program 26 for outputting a result of estimating the optimum parameter of the processing laser light Lw radiated to the planned irradiation spot K in accordance with an input of the pre-processing spot data D1. The processing step S03 is the step of radiating the processing laser light Lw to the planned irradiation spot K on the basis of the result of estimating the optimum parameter of the processing laser light Lw.

FIG. 5 is a diagram showing an example of a processing flow and a data flow in the laser processing method shown in FIG. 4. In the example of FIG. 5, in the estimation step S02, the estimation unit 23 outputs the optimum parameter estimation result D2 of the processing laser light Lw using a calibration curve model. In this example, the pre-processing acquisition step S01 is first performed for one planned irradiation spot K to acquire the pre-processing spot data D1, which includes the material of the object S and the ratio between the intensity of specular reflected light and the intensity of scattered light.

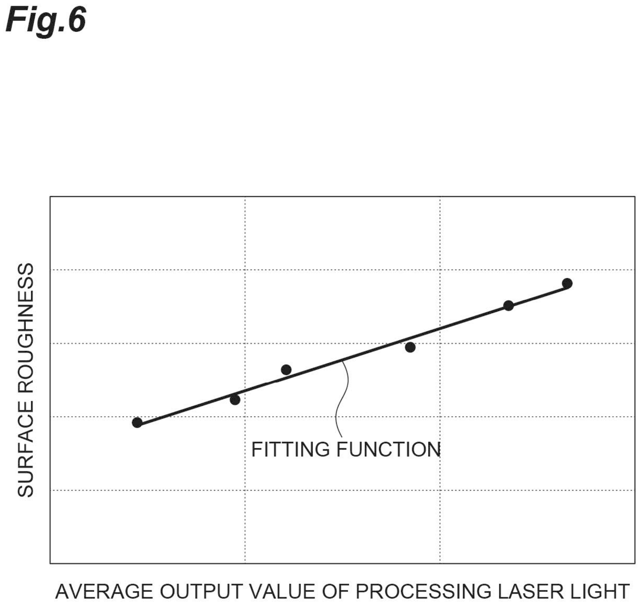

Next, in the estimation step S02, the estimation unit 23 refers to the calibration curve model using the pre-processing spot data D1. FIG. 6 is a diagram showing an example of the calibration curve model. In the example of FIG. 6, the horizontal axis represents an average output of the processing laser light Lw and the vertical axis represents the surface roughness of the object S. In this calibration curve model, for a plurality of samples for the object S, the surface roughness of the object S before processing is plotted in association with an average output value of the processing laser light Lw for setting the surface roughness to a desired value, and a fitting function is generated for the plurality of plotted points.

The estimation unit 23 calculates the surface roughness of the object S on the basis of the ratio of the intensity of the specular reflected light and the intensity of the scattered light. Also, by referring to the calibration curve model using a result of calculating surface roughness and substituting the result of calculating the surface roughness into the fitting function, the average output value of the processing laser light Lw is output as the optimum parameter estimation result D2 of the processing laser light Lw. In the processing step S03, the processing light source 3 is controlled on the basis of the average output value of the processing laser light Lw output by the estimation unit 23, and radiation of the processing laser light Lw to the surface Sa of the object S is performed.

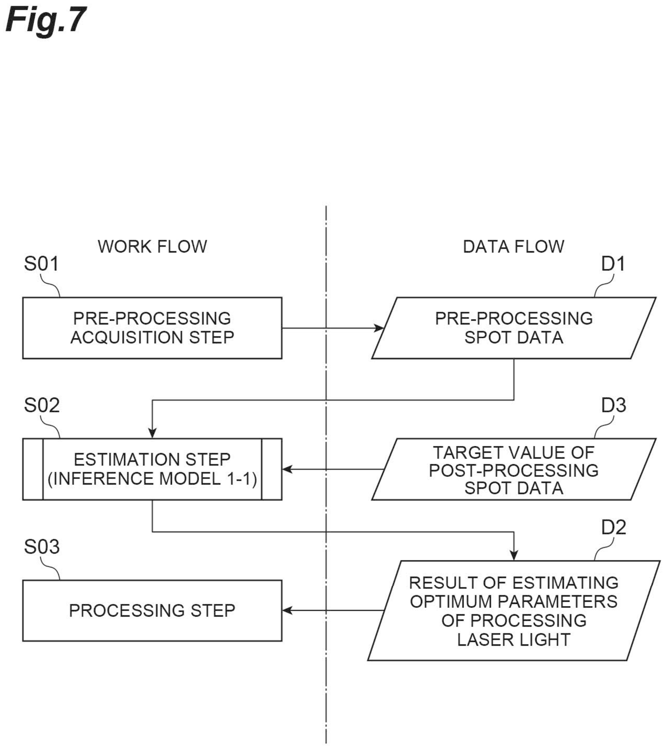

FIG. 7 a diagram showing another example of the processing flow and the data flow in the laser processing method shown in FIG. 4. The example in FIG. 7 is a model for estimating the optimum parameter of the processing laser light Lw for the purpose of actual processing. In the example of FIG. 7, in the estimation step S02, the estimation unit 23 uses an inference model 1-1 generated by machine learning training as the estimation program 26 and outputs an optimum parameter estimation result D2 of the processing laser light Lw.

As an example, the estimation unit 23 may have, in advance, a combination of the pre-processing spot data D1 and the optimum parameters (correct parameters) of the processing laser light Lw according to the pre-processing spot data D1, and generate an inference model by machine learning using these parameters. As another example, the estimation unit 23 may have, in advance, a combination of the pre-processing spot data D1 and the difference between the post-processing spot data target value obtained by processing with parameters that are not necessarily optimum for the processing laser light Lw according to the pre-processing spot data D1 and the processing result (an index representing the degree of incorrect answers), and an inference model may be generated by machine learning using these.

The inference model 1-1 is a model for inputting the pre-processing spot data D1 acquired in the pre-processing acquisition step S01 and the target post-processing surface state of the object S and outputting the optimum parameter estimation result D2 of the processing laser light Lw. Here, the target post-processing surface state is, for example, the target value D3 of the post-processing spot data input by the user to the input reception unit 22, and may not necessarily involve the post-processing acquisition step S04 to be described below.

The inference model includes, for example, a decision tree algorithm. The decision tree algorithm may be a gradient boosting decision tree. In other words, the inference model may be generated by ensemble learning. The gradient boosting decision tree may be a light gradient boosting machine (LightGBM). The inference model may include something other than a decision tree algorithm, as long as it is generated by machine learning-based training and performs the input and output processes described above.

The inference model is expected to be used as a program module that is part of artificial intelligence software. The inference model, for example, is used in a computer including a processor and a memory, and the computer's processor operates in accordance with instructions from the model stored in the memory. For example, the computer's processor operates to input information to the model according to such instructions, perform operations according to the model, and output results from the model. Specifically, the computer's processor operates to input information to a decision tree algorithm according to the relevant instructions, perform arithmetic operations based on a parameter such as a weighting factor of features in the decision tree algorithm, and output results from the terminal node that is finally reached.

FIG. 8 is a flowchart showing the laser processing method according to a second embodiment of the present disclosure. As shown in FIG. 8, unlike the laser processing method of the first embodiment, the laser processing method of the second embodiment further includes a post-processing acquisition step S04 and a determination step S05 as post-processing steps after steps from the pre-processing acquisition step S01 to the processing step S03.

The post-processing acquisition step S04 is the step of acquiring the post-processing spot data D4 about the post-processing surface state of the object S in the planned irradiation spot K. The determination step S05 is the step of determining whether or not it is necessary to re-execute the processing step S03 on the basis of a comparison between the target post-processing surface state of the object S and the post-processing surface state of the object S indicated in the post-processing spot data D4. In the determination step S05, for example, it is determined that it is unnecessary to re-execute the processing step S03 when the difference value between the surface roughness indicated by the target value D3 of the post-processing spot data and the surface roughness indicated by the post-processing spot data D4 is less than a predetermined threshold value and it is determined that it is necessary to re-execute the processing step S03 when the difference value is equal to or greater than the predetermined threshold value.

When it is determined that it is unnecessary to re-execute the processing step S03 in the determination step S05, the process ends. When it is determined that it is necessary to re-execute the processing step S03 in the determination step S05, the processing step S03 is re-executed. In the re-execution, the steps from the pre-processing acquisition step S01 to the processing step S03 may be re-executed. After the re-execution, the post-processing acquisition step S04 and the determination step S05 may be re-executed.

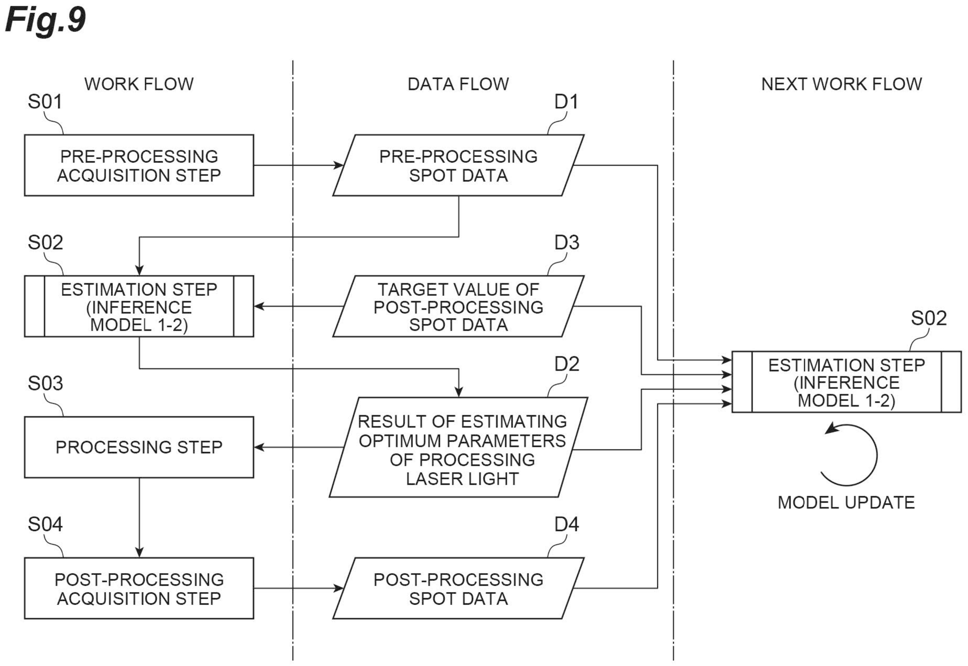

FIG. 9 is a diagram showing an example of a processing flow and a data flow in the laser processing method shown in FIG. 8. The example in FIG. 9 is a data collection and condition search model for updating the actual processing model. In the example of FIG. 9, in the estimation step S02, the estimation unit 23 outputs the optimum parameter estimation result D2 of the processing laser light Lw using the inference model 1-2 generated by machine learning-based training. The inference model 1-2 is a model for inputting the pre-processing spot data D1 acquired in the pre-processing acquisition step S01 and the target post-processing surface state of the object S (a target value D3 of post-processing spot data), and outputting the optimum parameter estimation result D2 of the processing laser light Lw.

The estimation unit 23 inputs the post-processing spot data D4 obtained in the post-processing acquisition step S04 to the inference model 1-2 together with the target value D3 of the post-processing spot data, and updates the inference model 1-2 for use in the next processing flow on the basis of a difference between the post-processing spot data D4 and the target value D3 of the post-processing spot data (machine learning-based training is performed). When, for example, the pre-processing spot data D1 and the target value D3 of the post-processing spot data are input, the estimation unit 23 re-trains the inference model 1-2 so that the post-processing spot data D4 approaches the target value D3 of the post-processing spot data. In the following processing flow, each of the steps from the pre-processing acquisition step S01 to the determination step S05 is performed using the updated inference model 1-2.

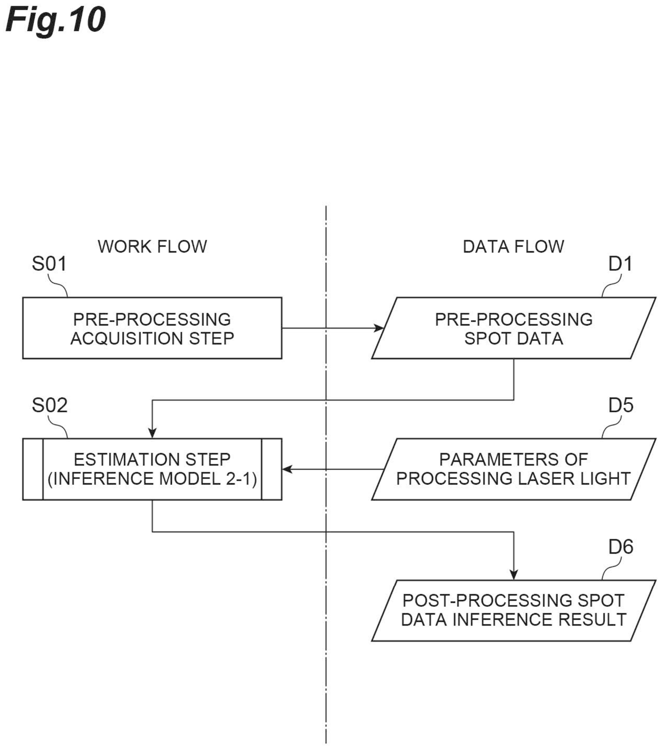

FIG. 10 is a diagram showing a processing result estimation method according to an embodiment of the present disclosure. An example of FIG. 10 is a processing result prediction model for the purpose of processing simulation. In the example of FIG. 10, in the estimation step S02, the estimation unit 23 outputs a post-processing spot data estimation result D6 using the inference model 2-1 generated by machine learning-based training. As an example, the estimation unit 23 has, in advance, a combination of the pre-processing spot data D1 and a parameter D5 of the processing laser light and a post-processing spot data estimation result (a correct parameter), and generates an inference model by machine learning using them.

The inference model 2-1 inputs the pre-processing spot data D1 acquired in the pre-processing acquisition step S01 and the parameter D5 of the processing laser light and outputs the post-processing spot data estimation result D6. The parameter D5 of the processing laser light, for example, can be arbitrarily input by the user of the laser processing device 1 via the input reception unit 22.

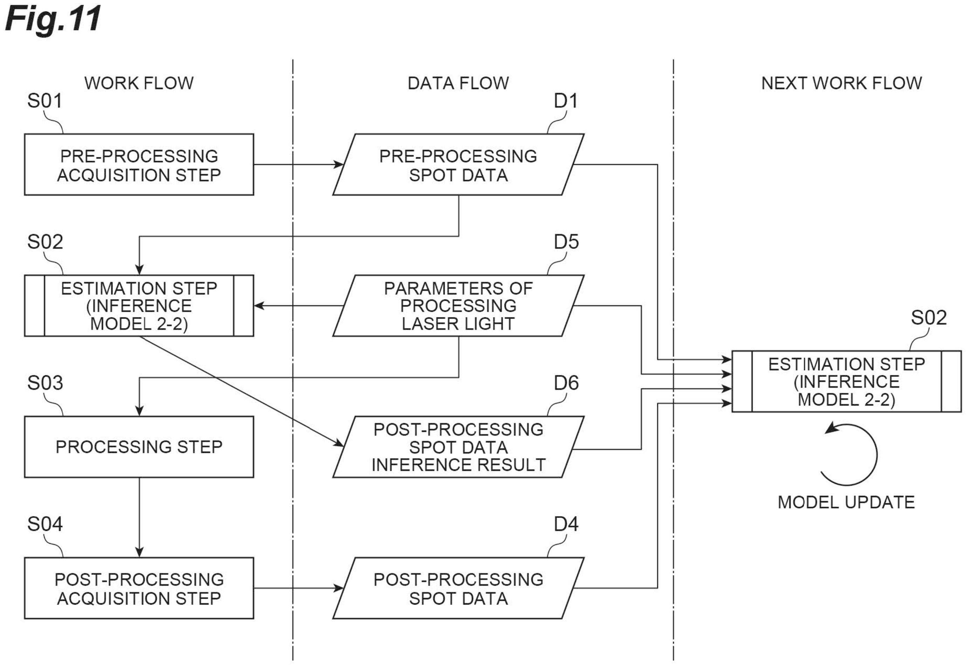

FIG. 11 is a diagram showing an example of a laser processing method to which the processing result estimation method shown in FIG. 10 is applied. The example of FIG. 11 is a data collection and condition search model for updating an actual processing model using a post-processing spot data estimation result D6. In the example of FIG. 11, in the estimation step S02, the estimation unit 23 outputs the post-processing spot data estimation result D6 using the inference model 2-2 generated by machine learning-based training. The method for generating the inference model 2-2 is similar to that for generating the inference model 2-1. Like the inference model 2-1 shown in FIG. 10, inference model 2-2 inputs pre-processing spot data D1 acquired in the pre-processing acquisition step S01 and a parameter D5 of processing laser light, and outputs the post-processing spot data estimation result D6.

The estimation unit 23 inputs post-processing spot data D4 obtained in a post-processing acquisition step S04 to the inference model 2-2 together with the post-processing spot data estimation result D6, and updates the inference model 2-2 for use in the next processing flow on the basis of a difference between the post-processing spot data D4 and the post-processing spot data estimation result D6 (machine learning-based training is performed). When, for example, the post-processing spot data D4 and the post-processing spot data estimation result D6 are input, the estimation unit 23 re-trains the inference model 2-2 so that the post-processing spot data D4 approaches the post-processing spot data estimation result D6. In the next processing flow, the updated inference model 2-2 is used to perform each of the steps from the pre-processing acquisition step S01 to the determination step S05.

As described above, in the laser processing device 1 and the laser processing method, estimation of the optimum parameters of the processing laser light Lw using the pre-processing spot data D1 is performed for one planned irradiation spot K corresponding to irradiation of one beam of processing laser light Lw. Thereby, it is possible to avoid the complexity of data processing required for estimation, compared to the conventional method for estimating the optimum parameter of the processing laser light on the basis of three-dimensional mapping data constructed using a large number of image data items. Therefore, the laser processing device 1 and the laser processing method enable high-speed estimation of the optimum parameters of the processing laser light Lw and inline evaluation of the surface state before and after processing.

In the present embodiment, a plurality of planned irradiation spots K on a surface Sa of an object S are set, the pre-processing spot data D1 of the plurality of planned irradiation spots K is acquired, and the optimum parameter of the processing laser light Lw for each of the plurality of planned irradiation spots K is estimated so that the post-processing surface states in the plurality of planned irradiation spots K are uniform. Thereby, it is possible to perform high-speed processing with uniform surface states in the plurality of planned irradiation spots K. Therefore, high-speed surface processing can be implemented through continuous optimum spot processing.

In the present embodiment, a plurality of planned irradiation spots K are set on the surface Sa of the object S and the inspection laser light Ld is radiated to the next planned irradiation spot K at the timing when the processing laser light Lw is radiated to one of the planned irradiation spots K. Thereby, it is possible to shorten a period of time from the processing of one planned irradiation spot K to the processing of the next planned irradiation spot K, because the processing of one planned irradiation spot K and the inspection of the next planned irradiation spot K overlap in time. Thus, a plurality of spot processing operations can be performed at higher speed.

In the present embodiment, the pre-processing spot data D1 include sat least one of a material of the object S, a temperature in a processing environment, an intensity of specular reflected light of the inspection laser light Ld in the planned irradiation spot K, an intensity of scattered light of the inspection laser light Ld, a ratio of the intensity of specular reflected light and the intensity of scattered light, a half width of an X-ray diffraction intensity profile, a center position of an X-ray diffraction ring, a Fourier transform value of a scattered light image, displacement data from optical interference measurement, and displacement data from a non-contact displacement meter using the inspection beam Lb. By including at least one of the above-described parameters in the pre-processing spot data D1, the optimum parameters of the processing laser light Lw can be estimated more accurately.

In the present embodiment, the optimum parameters of the processing laser light Lw include at least one of a wavelength, a pulse width, a pulse intensity, the number of pulses, a pulse shape, a spatial phase pattern, and fluence. When at least one of the above-described parameters is included in the optimum parameters of the processing laser light Lw, the processing of the surface Sa of the object S can be performed more suitably.

In the present embodiment, the spot width W of the processing laser light Lw may be less than or equal to 200 µm. The spatial resolution of processing is improved by setting the planned irradiation spot K of the processing laser light Lw to a narrow area with a width of 200 µm or less.

In the present embodiment, post-processing spot data D4 about the post-processing surface state of the object S in the planned irradiation spot K is acquired, and it is determined whether or not it is necessary to re-execute a process of radiating the processing laser light Lw on the basis of a comparison between a target post-processing surface state of the object S and a post-processing surface state of the object indicated in the post-processing spot data D4. Thus, the deviation between the target post-processing surface state and the actual post-processing surface state can be corrected by re-executing a process of radiating the processing laser light Lw as necessary.

Moreover, the laser processing device 1 of the present embodiment includes a stage 2 configured to hold the object S freely moving at least in the in-plane direction of the surface Sa. Thereby, it is possible to scan the processing point and the inspection point on the surface Sa of the object S without moving the system of the processing laser light Lw and the inspection laser light Ld. Thus, workability of processing can be improved.

### Reference Signs List

1 Laser processing device, 2 Stage, 3 Processing light source (light source), 5 Inspection light source (beam source), 6 First detection unit (detection unit), 7 Second detection unit (detection unit), 21 Acquisition unit, 23 Estimation unit, 24 Determination unit, 25 Control unit, 26 Estimation program, Lw Processing laser light, Ld Inspection laser light (inspection beam), S Object, Sa Surface, K Planned irradiation spot, W Spot width, D1 Pre-processing spot data, D4 Post-processing spot data

## Claims

1. A laser processing method for performing spot processing of a surface of an object by radiating processing laser light to the surface, the laser processing method comprising:
a pre-processing acquisition step of radiating an inspection beam to a planned irradiation spot of the processing laser light on the surface of the object and acquiring pre-processing spot data about a pre-processing surface state of the object in the planned irradiation spot on the basis of a result of radiating the inspection beam in the planned irradiation spot;
an estimation step of estimating an optimum parameter of the processing laser light for setting a post-processing surface state of the object in the planned irradiation spot as a target surface state using an estimation program for outputting a result of estimating the optimum parameter of the processing laser light radiated to the planned irradiation spot in accordance with an input of the pre-processing spot data; and
a processing step of radiating the processing laser light to the planned irradiation spot on the basis of the result of estimating the optimum parameter of the processing laser light,
wherein the pre-processing acquisition step, the estimation step, and the processing step are performed in that order.

2. The laser processing method according to claim 1,
wherein a plurality of planned irradiation spots are set on the surface of the object,
wherein the pre-processing acquisition step includes acquiring the pre-processing spot data of the plurality of planned irradiation spots, and
wherein the estimation step includes estimating the optimum parameter of the processing laser light for each of the plurality of planned irradiation spots.

3. The laser processing method according to claim 2, wherein the estimation step includes estimating the optimum parameter of the processing laser light for each of the plurality of planned irradiation spots so that post-processing surface states in the plurality of planned irradiation spots are uniform.

4. The laser processing method according to any one of claims 1 to 3,
wherein a plurality of planned irradiation spots are set on the surface of the object, and
wherein the pre-processing acquisition step is performed for the next planned irradiation spot at a timing when the processing step is performed for one planned irradiation spot.

5. The laser processing method according to any one of claims 1 to 4, wherein the pre-processing spot data includes at least one of an intensity of specular reflected light of the inspection laser light in the planned irradiation spot, an intensity of scattered light of the inspection laser light, a ratio of the intensity of specular reflected light and the intensity of scattered light, a half width of an X-ray diffraction intensity profile, a center position of an X-ray diffraction ring, a Fourier transform value of a scattered light image, displacement data from optical interference measurement, and displacement data from a non-contact displacement meter using the inspection beam.

6. The laser processing method according to any one of claims 1 to 5, wherein optimum parameters of the processing laser light include at least one of a wavelength, a pulse width, a pulse intensity, the number of pulses, a pulse shape, a spatial phase pattern, and fluence.

7. The laser processing method according to any one of claims 1 to 6, wherein the spot width of the processing laser light is 200 µm or less.

8. The laser processing method according to any one of claims 1 to 7, further comprising:
a post-processing acquisition step of acquiring post-processing spot data about the post-processing surface state of the object in the planned irradiation spot; and
a determination step of determining whether or not it is necessary to re-execute the processing step on the basis of a comparison between a target post-processing surface state of the object and the post-processing surface state of the object indicated in the post-processing spot data.

9. A laser processing device for radiating processing laser light to a surface of an object to perform spot processing of the surface, the laser processing device comprising:
a light source configured to output the processing laser light toward a planned irradiation spot of the surface of the object;
a beam source configured to output an inspection beam toward the planned irradiation spot;
a detection unit configured to detect a result of radiating the inspection beam in the planned irradiation spot;
an acquisition unit configured to acquire pre-processing spot data about a pre-processing surface state of the object in the planned irradiation spot on the basis of the result detected by the detection unit;
an estimation unit configured to estimate an optimum parameter of the processing laser light for setting a post-processing surface state of the object in the planned irradiation spot as a target surface state using an estimation program for outputting a result of estimating the optimum parameter of the processing laser light radiated to the planned irradiation spot in accordance with an input of the pre-processing spot data; and
a control unit configured to control an output of the processing laser light in the light source on the basis of the result of estimating the optimum parameter of the processing laser light.

10. The laser processing device according to claim 9,
wherein the acquisition unit acquires the pre-processing spot data for each of the plurality of planned irradiation spots, and
wherein the estimation unit estimates the optimum parameter of the processing laser light for each of the plurality of planned irradiation spots.

11. The laser processing device according to claim 10, wherein the estimation unit estimates the optimum parameter of the processing laser light for each of the plurality of planned irradiation spots so that post-processing surface states in the plurality of planned irradiation spots are uniform.

12. The laser processing device according to any one of claims 9 to 11, wherein the control unit causes the light source and the beam source to be synchronized so that the inspection beam is output to the next planned irradiation spot at a timing when the processing laser light is output to one planned irradiation spot.

13. The laser processing device according to any one of claims 9 to 12, wherein the pre-processing spot data includes at least one of an intensity of specular reflected light of the inspection laser light in the planned irradiation spot, an intensity of scattered light of the inspection laser light, a ratio of the intensity of specular reflected light and the intensity of scattered light, a half width of an X-ray diffraction intensity profile, a center position of an X-ray diffraction ring, a Fourier transform value of a scattered light image, displacement data from optical interference measurement, and displacement data from a non-contact displacement meter using the inspection beam.

14. The laser processing device according to any one of claims 9 to 13, wherein optimum parameters of the processing laser light include at least one of a wavelength, a pulse width, a pulse intensity, the number of pulses, a pulse shape, a spatial phase pattern, and fluence.

15. The laser processing device according to any one of claims 9 to 14, wherein the spot width of the processing laser light is 200 µm or less.

16. The laser processing device according to any one of claims 9 to 15, further comprising a stage configured to hold the object freely movable in at least an in-plane direction of the surface.

17. The laser processing device according to any one of claims 9 to 14,
wherein the acquisition unit acquires post-processing spot data about the post-processing surface state of the object in the planned irradiation spot, and
wherein the laser processing device further comprises a determination unit configured to determine whether or not it is necessary to re-execute a process of radiating the processing laser light for the planned irradiation spot on the basis of a comparison between a target post-processing surface state of the object and a post-processing surface state of the object indicated in the post-processing spot data.

18. A processing result estimation method for estimating post-processing spot data about a post-processing surface state of an object in laser processing for performing spot processing on a surface of the object by radiating processing laser light to the surface, the processing result estimation method comprising:
a pre-processing acquisition step of radiating an inspection beam to a planned irradiation spot of the processing laser light on the surface of the object and acquiring pre-processing spot data about a pre-processing surface state of the object in the planned irradiation spot on the basis of a result of radiating the inspection beam in the planned irradiation spot; and
an estimation step of estimating the post-processing spot data about the post-processing surface state of the object in the planned irradiation spot when the planned irradiation spot is processed with the processing laser light of any parameter using the pre-processing spot data and an estimation program for outputting a result of estimating the post-processing spot data in accordance with an input of any parameter related to the processing laser light radiated to the planned irradiation spot,
wherein the pre-processing acquisition step and the estimation step are performed in that order.
